Europäisches Patentamt

European Patent Office

Office européen des brevets

(11) Veröffentlichungsnummer: **0 502 458 A2**

## (12) EUROPÄISCHE PATENTANMELDUNG

(21) Anmeldenummer: **92103557.2**

(22) Anmeldetag: **02.03.92**

(51) Int. Cl.5: **F16F 13/00**, F16F 1/36,
B60K 5/12

(30) Priorität: **04.03.91 DE 4106838**

(43) Veröffentlichungstag der Anmeldung:
**09.09.92 Patentblatt 92/37**

(84) Benannte Vertragsstaaten:
**DE ES FR GB IT SE**

(71) Anmelder: **METZELER GIMETALL AG**
**Gneisenaustrasse 15**
**W-8000 München 50(DE)**

(72) Erfinder: **Richter, Matthias, Dr.**
**Walchstädter Strasse 16**
**W-8084 Inning(DE)**
Erfinder: **Gugsch, Mathias**
**Schleissheimerstrasse 280a**
**W-8000 München 40(DE)**
Erfinder: **Gresslinger, Robert**
**Friedenlinde 9**
**W-8334 Wurmmannsquick(DE)**

(74) Vertreter: **Michelis, Theodor, Dipl.-Ing. et al**
**Seibert + Michelis Rechtsanwälte und**
**Patentanwälte Tattenbachstrasse 9**
**W-8000 München 22(DE)**

(54) **Dämpfendes Aggregatlager.**

(57) Bei einem dämpfenden Aggregatlager, insbesondere zur schwingungsisolierenden Motorlagerung in Kraftfahrzeugen, mit einem angenähert ringförmigen Federkörper aus Faserverbundwerkstoffen, ist zur zusätzlichen akustischen Entkopplung erfindungsgemäß vorgesehen, daß innerhalb des Federkörpers (1) zwischen den Krafteinleitungselementen (4) eine mit Flüssigkeit gefüllte Arbeitskammer (14) aus einem elastisch deformierbaren Material geringer Steifigkeit in Arbeitsrichtung, aber hoher Volumensteifigkeit angeordnet ist, die über einen Kanal (27) mit einer Ausgleichskammer (26) hydraulisch in Verbindung steht.

Fig.3

EP 0 502 458 A2

Die Erfindung bezieht sich auf ein dämpfendes Aggregatlager, insbesondere zur schwingungsisolierenden Motorlagerung in Kraftfahrzeugen mit einem angenähert ringförmigen Federkörper aus Faserverbundwerkstoffen, der einen Wickelkörper mit in mehreren Lagen gewickelten, kunstharzgetränkten Fasern aufweist und auf zwei gegenüberliegenden Seiten mittels Krafteinleitungselementen eingespannt ist.

Üblicherweise werden Motor und Getriebe in Kraftfahrzeugen mittels Gummi-Metall-Elementen gelagert, um einmal den Motor im Fahrzeug zu fixieren, wobei diese Haltefunktion nicht nur unter den statischen Lasten und unter den aus dem Antriebsmomenten resultierenden Zusatzlasten erfüllt werden muß, sondern auch unter den im Crashfall auftretenden Extremlasten. Darüberhinaus müssen Motorlager eine Reihe fahrdynamischer und akustischer Aufgaben erfüllen, was zu teilweise widersprüchlichen Anforderungen bei der Bauteilauslegung und zu nicht optimalen Kompromissen führt.

Dieser grundlegende Zielkonflikt resultiert aus den unterschiedlichen Anforderungen, die sich neben der Erfüllung der Haltefunktion, aus der Aufgabe der Optimierung des Schwingungskomforts und der Fahrzeugakustik ergeben. Wahrend für den Schwingungskomfort eine steife, stark gedämpfte Anbindung des Motors an das Fahrzeug wesentlich wäre, ist zur Vermeidung akustischer Übertragungen eine hohe Isolation, d.h. eine niedrige Steifigkeit mit geringer Dämpfung von Vorteil. Verschärft wird dieser Zielkonflikt durch steigende Einsatztemperaturen der Motorlager in Verbindung mit teil- oder vollgekapselten Motoren. Die derzeit zumeist eingesetzten, akustisch sehr günstigen Naturkautschuksorten kommen dann sehr schnell an ihre Leistungsgrenze, die Dauerfestigkeit sinkt, Setzerscheinungen nehmen stark zu und die schwingungsmässige Abstimmung ist nicht mehr langzeitstabil.

Einen Ausweg aus der vorstehend dargestellten Problematik ist nur mit einer verstärkten Funktionstrennung möglich, wie sie beispielsweise bei hydraulisch dämpfenden Motorlagern bereits zu einem wesentlichen Schritt verwirklicht ist. Bei diesem Lagertyp wird die zur Verbesserung des Schwingungskomforts in einem begrenzten Frequenzbereich benötigte Dämpfung nicht mehr breitbandig durch den Gummi erzeugt, sondern schmalbandig - zumeist im Bereich zwischen 5 und 2Ø Hz - mit Hilfe schwingungsfähiger Flüssigkeitssysteme, die die Dämpfungs- und Tilgungseigenschaften des Lagers bestimmen. Aber auch bei diesem Lagertyp besteht das tragende Element aus einer Gummifeder, dessen dynamisches Verhalten und statisches Setzungsverhalten von der Umgebungstemperatur abhängt. Darüberhinaus kann die, für das dynamische Verhalten des Lagers wesentliche Volumensteifigkeit nicht unabhängig von der statischen Steifigkeit der Tragfähigkeit der Tragfeder in den drei Raumrichtungen eingestellt werden.

Eine Lösung der für eine Lagerung mittels Gummimaterialien auftretenden Probleme kann aber mit dem eingangs beschriebenen Federkörper erreicht werden, wie er beispielsweise aus der DE 39 Ø8 474 A1 bekannt ist. Ein derartiger Federkörper übernimmt die Tragfunktion und bestimmt damit im wesentlichen die elastischen Eigenschaften des Lagers, wobei die Krafteinleitungselemente in Form von metallischen Bügeln, die gegenüber dem Wickelkörper über elastische Gummischichten verspannt sind und den Wickelkörper zumindest teilweise umfassen, eine schonende großflächige Krafteinleitung gewährleisten.

Ein solches Lager bietet zwar eine gute Grunddämpfung, hat jejedoch wegen seiner relativ hohen Steifigkeit schlechte akustische Eigenschaften, d.h. Schwingungen im akustischen Bereich werden nur wenig eliminiert.

Der vorliegenden Erfindung liegt daher die Aufgabe zu Grunde, ein solches Lager so auszugestalten, daß damit auch eine optimale akustische Entkopplung möglich wird, so daß dieses Lager die eingangs geschilderten Anforderungen weitgehend erfüllt.

Zur Lösung dieser Aufgabe ist erfindungsgemäß vorgesehen, daß zur zusätzlichen hydraulischen Dämpfung innerhalb des Federkörpers zwischen den Krafteinleitungselementen eine mit Flüssigkeit gefüllte Arbeitskammer aus einem elastisch deformierbaren Material geringer Steifigkeit in Arbeitsrichtung, aber hoher Volumensteifigkeit angeordnet ist, die über einen Kanal mit einer Ausgleichskammer in Verbindung steht.

Zweckmäßigerweise ist die Arbeitskammer von einem druckstabilen Faltenbalg gebildet.

Mit einer solchen zusätzlichen Anordnung einer hydraulisch wirkenden Arbeitskammer kann die dynamische Steifigkeit der Arbeitskammer unabhängig von der Steifigkeit der Tragfeder eingestellt werden.

Zweckmäßigerweise sollte der Kanal durch eine Verbindungsleitung definierter Länge und Durchmesser gebildet sein, der mit einer außerhalb des tragenden Federkörpers liegenden Ausgleichskammer in Verbindung steht.

Dabei ist es besonders zweckmäßig, wenn die Ausgleichskammer angenähert gleichen Aufbau und Kenndaten wie die Arbeitskammer aufweist. Durch Benutzung einer Ausgleichskammer, die in ihrer Form und/oder ihrer Steifigkeitskennlinie mit der Arbeitskammer identisch ist, d.h. eines mit der Arbeitskammer zumindest von der Kennlinie her gesehen identischen Faltenbalges, kann vermieden werden, daß sich die Kennlinie der dynamischen Steifigkeit eines solchen Lagers durch statische Laständerungen wesentlich verschiebt.

In Weiterbildung der Erfindung ist es möglich, daß die Ausgleichskammer in gleicher Achse wie die Arbeitskammer auf der anderen Seite des Haupttragelementes spiegelbildlich zur Arbeitskammer angeordnet ist und über eine ein Krafteinleitungselement durchdringenden Kanal mit der Arbeitskammer in Verbindung steht.

Es ist aber auch möglich, daß die Ausgleichskammer in gleicher Achse wie die Arbeitskammer auf der Oberseite eines Motorhalteflansches liegt und über ein, das obere Krafteinleitungselement durchdringenden Kanal mit der Arbeitskammer in Verbindung steht.

Eine besonders zweckmäßige Ausgestaltung liegt darin, daß beiderseits des Haupttragelementes je ein Federkörper mit einer Arbeitskammer spiegelbildlich gegeneinander geschaltet sind und über einen, die beiden Krafteinleitungselemente am Haupttragelement durchdringenden Kanal miteinander in Verbindung stehen. Dadurch erfolgt ein Pumpeffekt in beiden Arbeitsrichtungen, so daß damit Kavitationen vermieden werden.

Zweckmäßig ist es ferner, wenn in der Arbeitskammer ein, von einer Stirnseite ausgehendes zylindrisches Anschlagpolster aus elastischem Material angeordnet ist.

Zusätzlich kann in der Arbeitskammer beispielsweise am Ende oder im vorderen Bereich des Anschlagpolsters eine quer liegende Scheibe angeordnet sein, die als massenkraftwirksamer Plunger eine definierte Steifigkeitsabsenkung im akustischen Bereich erreichen läßt.

Anhand einer schematischen Zeichnung sind Aufbau und Funktionsweise von Ausführungsbeispielen nach der Erfindung näher erläutert. Dabei zeigen:

Fig. 1   das Grundprinzip eines dämpfenden Aggregatlagers im Längsschnitt,

Fig. 2   einen Querschnitt durch ein solches Lager, entsprechend der Schnittlinie II-II nach Fig. 1 mit separat liegender Ausgleichskammer

Fig. 3   einen Längsschnitt durch ein solches Lager mit der Ausgleichskammer auf der anderen Seite des Halteflansches,

Fig. 4   einen Längsschnitt durch ein solches Lager mit einer Ausgleichskammer oberhalb eines Tragarmlagers und

Fig. 5   einen Längsschnitt durch ein vorspannbares, doppelt wirkendes Lager mit zwei Federkörpern.

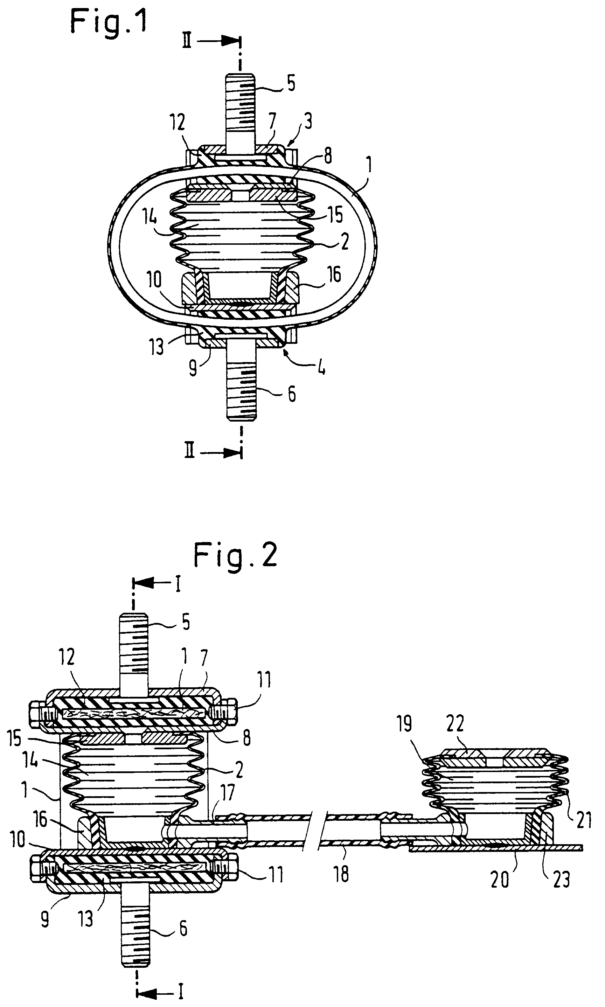

Wie man aus Fig. 1 ersieht, weist das Aggregatlager im wesentlichen einen ovalen Federkörper aus einem Wickelkörper 1, sowie einen innenliegenden, mit Flüssigkeit gefüllten Faltenbalg 2 auf.

Der Wickelkörper 1 hat im dargestellten Ausführungsbeispiel angenähert ovale Form mit geraden Mittelteilen und halbkreisförmigen Seitenteilen. Es ist aber auch jede andere geschlossene geometrische Form möglich, wie z.B. eine Ellipse oder ein Kreis.

Der Wickelkörper 1 besteht aus mehreren Schichten kunstharzgetränkter Fasern, die hauptsächlich quer zur Beanspruchungsrichtung umlaufend gewickelt sind. Es können aber auch einzelne Schichten in einem abweichenden Winkel gewickelt sein.

Als verstärkende Fasern kommen im wesentlichen Glasfasern, aber auch Kohlefasern oder Aramid in Frage, während als aushärtbare Matrixmaterialien im wesentlichen Duroplaste oder aber auch Thermoplaste z.B. Polyether-Etherketon (PEFK) verwendet werden können.

Der fertig gewickelte, getränkte und ausgehärtete Wickelkörper 1 wird dann auf einander gegenüberliegenden Seiten über entsprechende Krafteinleitungselemente 3 und 4 an den entsprechenden Lagerpunkten 5 für den Motor und 6 für die Karosserie festgelegt. Diese Krafteinleitungselemente 3 und 4 bestehen nach dem dargestellten Ausführungsbeispiel aus Bügeln in Form von zwei U-förmigen Laschen 7 und 8, bzw. 9 und 1∅, die seitlich über Schrauben 11 gegeneinander verspannt sind, und den Wickelkörper 1 an den Längsseiten umschließen. Zwischen den Laschen 7 und 8, bzw. 9 und 1∅ sind elastische Zwischenschichten 12, bzw. 13 aus Gummi angeordnet. Diese Gummischichten 12 bzw. 13 können zwischen den Laschen 7 und 8 bzw. 9 und 1∅ einvulkanisiert sein; es ist aber auch möglich, diese dort einzukleben oder auch nur zwischenzuklemmen.

Innerhalb des Federkörpers 1 ist nunmehr zwischen den beiden innenliegenden U-förmigen 8 und 1∅ eine, von einem Faltenbalg 2 umschlossene Arbeitskammer 14 angeordnet, die eine geringe Steifigkeit in Arbeitsrichtung, aber eine hohe Volumensteifigkeit aufweist, d.h. dieser Faltenbalg 2 ist druckstabil in dem Sinne, daß er nicht nach außen bezüglich seines Durchmessers aufgeweitet werden kann. Dieser Faltenbalg 2 ist am oberen Ende über eine Platte 15 gegen die Lasche 8 und am unteren Ende über eine Platte 16 gegen die Lasche 1∅ flüssigkeitsdicht verspannt. Der Faltenbalg 2 selbst ist mit einer hydraulischen Flüssigkeit gefüllt.

Wie man aus Fig. 2 ersieht, weist die untere Platte 16 einen seitlichen Auslaß 17 auf, der über eine Verbindungsleitung 18 definierter Länge und definierten Durchmessers zu einer externen Ausgleichskammer 19 führt. Diese Ausgleichskammer 19 ist außerhalb der eigentlichen Lageranordnung auf einer gesonderten Platte 2∅ gelagert und weist im Prinzip den gleichen Aufbau wie die Arbeitskammer 14 auf, d.h. sie besteht aus einem gleichartigen Faltenbalg 21, der am oberen freien Ende von einer Platte 22 abgeschlossen ist und am unteren Ende in einem Ring 23 auf der Platte 2Ø verspannt ist.

Nach dem Einbau übernimmt bei einem solchen Lager zunächst der Federkörper 1 die eigentliche Tragfunktion, d.h. er nimmt die statische Last auf und bestimmt im wesentlichen die elastischen Eigenschaften des Lagers. Über einzelne, im Wikkelkörper des Federkörpers 1 einlaminierte Zwischenschichten aus Gummi oder Gleitfolien ist damit eine breitbandige, d.h. über einen breiten Frequenzbereich wirkende Grunddämpfung möglich. Die durch den Faltenbalg 2 gebildete hydraulische Dämpfungseinrichtung mit einer im Lagerinnern angeordneten Arbeitskammer 14 zwischen den beiden Krafteinleitungspunkten 3 und 4 aus einem elastisch defomierbaren Material mit geringer Steifigkeit in Arbeitsrichtung, aber hoher Volumensteifigkeit kann somit die dynamische Steifigkeit dieser Arbeitskammer unabhängig von der Steifigkeit der Tragfeder eingestellt werden.

Damit ist insbesondere das akustische Verhalten eines solchen Lagers positiv zu beeinflußen.

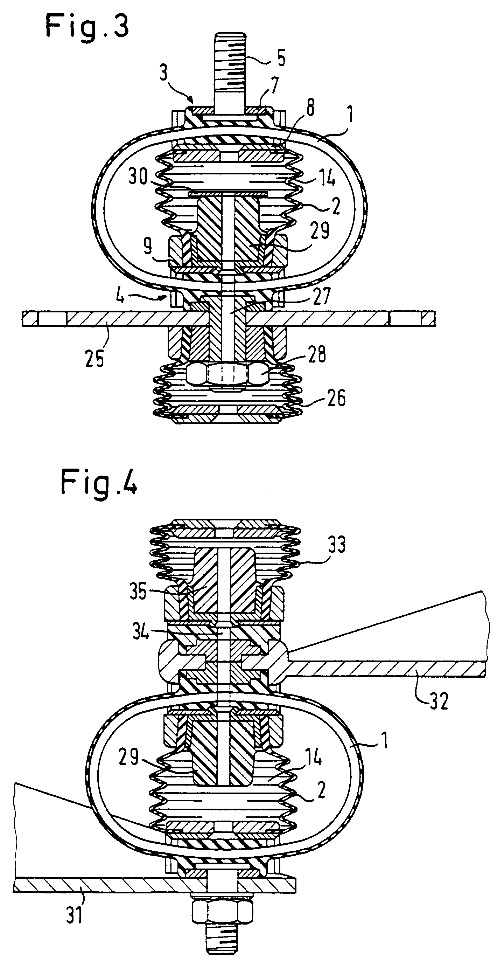

In Fig. 3 ist eine weitere Ausgestaltung des Aggregatlagers nach der vorliegenden Erfindung dargestellt. Oberhalb eines Karosserieflansches 25 ist in gleicher Weise ein Federkörper 1 mit einem Faltenbalg 2 vorgesehen. Eine Ausgleichskammer mit einem Faltenbalg 26 gleicher Dimension und gleichen Aufbaus wie der Faltenbalg 2 ist jetzt in der Achse mit dem Faltenbalg 2 unterhalb des Karosserieflansches 25 befestigt.

Dabei stehen beide Faltenbalge 2 und 26 über einen Kanal 27 miteinander in Verbindung, der das untere Krafteinleitungselement 4 sowie die Halteschraube 28 durchdringt.

Zusätzlich ist innerhalb des Faltenbalges 2 noch ein zylindrischer Anschlagpuffer 29 vorgesehen. Dieser Anschlagpuffer 29 kann - wie in der Zeichnung dargestellt - an seiner Stirnseite oder auch innerhalb des oberen Bereichs des Anschlagpuffers 29 mit einer ebenen Platte 3Ø größeren Durchmessers als massenkraftwirksamen Plunger versehen sein, der eine definierte Steifigkeitsabsenkung im akustischen Bereich erzielen kann.

Bei dem in Fig. 4 dargestellten Ausführungsbeispiel ist der Federkörper 1 zwischen einem Karosserietragarm 31 und einem Motortragarm 32 eingespannt. Der Faltenbalg 33 der Ausgleichskammer ist jetzt oberhalb des Motortragarmes 32 angeordnet und steht ebenfalls über einen Kanal 34 mit der Arbeitskammer 14 im Faltenbalg 2 in Verbindung. Zusätzlich ist hier auch innerhalb des Faltenbalges 34 ein Anschlagpuffer 35 vorgesehen, um damit gleiche Volumenverhältnisse innerhalb des Faltenbalges 2 der Arbeitskammer und des Faltenbalges 33 der Ausgleichskammer zu schaffen.

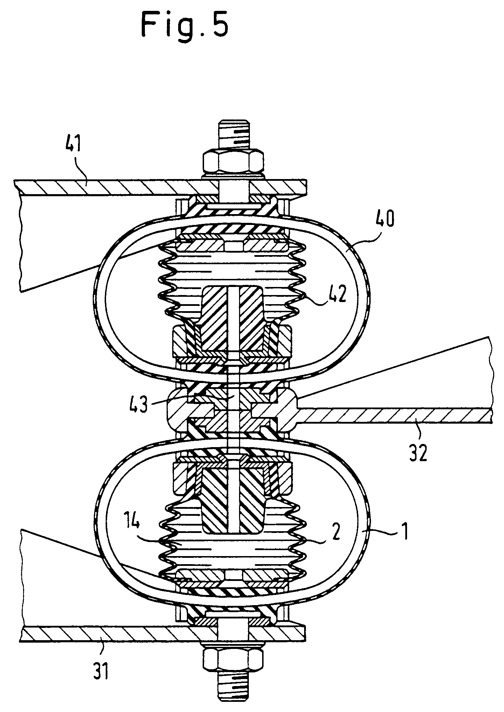

Eine erweiterte Ausgestaltung ist in Fig. 5 dargestellt, bei dem oberhalb und unterhalb des Motortragarmes 32 je ein Federkörper 1 und 4Ø angeordnet sind, die sich gegen Karosserietragarme 31 und 41 abstützen. Beide Federkörper 1 und 4Ø mit ihren Faltenbalgen 2 und 42 sind identisch aufgebaut, aber spiegelbildlich zueinander angeordnet. Durch eine solche Anordnung und Ausgestaltung erfolgt ein Pumpeffekt in beiden Arbeitsrichtungen, wodurch insbesondere Kavitationen vermieden werden.

Die beschriebenen Anordnungen ermöglichen gezielte Dämpfungs- und Tilgungseffekte in einem schmalen Frequenzbereich, unabhängig von der Vorlast wie bei einem klassischen Hydrolager, jedoch ohne dessen eingangs beschriebene Nachteile bezüglich Temperaturfestigkeit und Setzerscheinung. Darüberhinaus besteht die Möglichkeit, die dynamischen Kenndaten unabhängig von den geforderten stati schen Kennwerten in den drei Raumrichtungen festzulegen.

**Patentansprüche**

1. Dämpfendes Aggregatlager, insbesondere zur schwingungsisolierenden Motorlagerung in Kraftfahrzeugen, mit einem angenähert ringförmigen Federkörper aus Faserverbundwerkstoffen, der einen Wickelkörper mit in mehreren Lagen gewickelten, kunstharzgetränkten Fasern aufweist und auf zwei gegenüberliegenden Seiten mittels Krafteinleitungselementen eingespannt ist, dadurch gekennzeichnet, daß zur zusätzlichen hydraulischen Dämpfung innerhalb des Federkörpers (1; 4Ø) zwischen den Krafteinleitungselementen (3; 4) eine mit Flüssigkeit gefüllte Arbeitskammer (14) aus einem elastisch deformierbaren Material geringer Steifigkeit in Arbeitsrichtung, aber hoher Volumensteifigkeit angeordnet ist, die über einen Kanal (18; 27; 34; 43) mit einer Ausgleichskammer (19; 26; 33) hydraulisch in Verbindung steht.

2. Aggregatlager nach Anspruch 1, dadurch gekennzeichnet, daß die Arbeitskammer (14) von einem druckstabilen Faltenbalg (2) gebildet ist.

3. Aggregatlager nach Anspruch 1 und 2, dadurch gekennzeichnet, daß der Kanal durch eine Verbindungsleitung (18) definierter Länge und Durchmesser gebildet ist, der mit einer außerhalb des tragenden Federkörpers (1) liegenden Ausgleichskammer (19) in Verbindung steht.

4. Aggregatlager nach Anspruch 3, dadurch gekennzeichnet, daß die Ausgleichskammer (19) angenähert gleichen Aufbau und Kenndaten wie die Arbeitskammer (2) aufweist.

5. Aggregatlager nach Anspruch 1 bis 4, dadurch gekennzeichnet, daß die Ausgleichskammer (26) in gleicher Achse wie die Arbeitskammer (14) auf der anderen Seite des Haupttragelementes (25) spiegelbildlich zur Arbeitskammer (14) angeordnet ist und über einen, ein Krafteinleitungselement (4) durchdringenden Kanal (27) mit der Arbeitskammer (14) in Verbindung steht.

6. Aggregatlager nach Anspruch 1 bis 4, dadurch gekennzeichnet, daß die Ausgleichskammer (33) in gleicher Achse wie die Arbeitskammer (14) auf der Oberseite eines Motorhalteflansches (32) liegt, und über einen, das obere Krafteinleitungselement (3) durchdringenden Kanal (34) mit der Arbeitskammer in Verbindung steht.

7. Aggregatlager nach Anspruch 1 bis 4, dadurch gekennzeichnet, daß beiderseits des Haupttragelementes (32) je ein Federkörper (1; 40) mit einer Arbeitskammer (14; 42) spiegelbildlich gegeneinander geschaltet sind, und über einen, die beiden Krafteinleitungselemente (3; 44) am Haupttragelement (32) durchdringenden Kanal (43) miteinander in Verbindung stehen.

8. Aggregatlager nach einem der Ansprüche 1 bis 7, dadurch gekennzeichnet, daß in der Arbeitskammer (14) ein von einer Stirnseite ausgehendes zylindrisches Anschlagpolster (29) aus elastischem Material angeordnet ist.

9. Aggregatlager nach einem der Ansprüche 1 bis 7, dadurch gekennzeichnet, daß in der Arbeitskammer (14) eine im Abstand von einer Stirnsekte und an dieser abgestützt eine quer verlaufende Platte (30) geringeren Durchmessers als dem des Faltenbalges (2) als massewirksamer Plunger angeordnet ist.

10. Aggregatlager nach Anspruch 8 und 9, dadurch gekennzeichnet, daß der Plunger (30) an oder im Bereich der Stirnseite des Anschlagpolsters (29) angeordnet ist.

11. Aggregatlager nach Anspruch 1, dadurch gekennzeichnet, daß der Federkörper (1; 40) aus zwei konzentrischen Wickelkörpern besteht, zwischen denen Schichten aus einem anderen Material angeordnet sind.

12. Aggregatlager nach Anspruch 11, dadurch gekennzeichnet, daß zwischen den beiden Wickelkörpern eine Schicht aus Gummi einvulkanisiert ist.

13. Aggregatlager nach Anspruch 11, dadurch gekennzeichnet, daß zwischen den beiden Wickelkörpern jeweils an den Wickelkörpern haftende, aber aufeinander frei gleitende Gleitfolien eingewickelt sind.

# Fig.1

# Fig.2

**Fig.3**

**Fig.4**

# Fig.5